# EUROPEAN PATENT APPLICATION

(11) **EP 2 891 989 A1**
(43) Date of publication of application: **08.07.2015**
(21) Application number: 14150004.1
(22) Date of filing: 02.01.2014
(51) Int. Cl.: G06F 17/22

(54) **System and method for converting an electronic document from a paginated format to a non-paginated format**

(71) Applicant: E-Kiosk S.A., 00-838 Warszawa (PL)
(72) Inventor: Dietrich, Leslaw, 02-787 Warzawa (PL)
(74) Representative: Pawlowski, Adam

(57) **Abstract**

A computer-implemented method for converting an electronic document from a paginated format to a non-paginated format, the method characterized in that it comprises the steps of: receiving a paginated input file (201); filtering (202) the input file content and metadata in order to find supported syntax elements; generating (203) a model of the input file; generating (204) an XHTML output file comprising metadata of the input file document in its header and the input content from the of the input file document; generating (205) a CSS output file comprising formatting of the input content from the of the input file document; converting (206) graphical files into a common graphical format and referencing the graphical files from the XHTML document; packing (207) the XHTML, CSS and graphical files into a non-paginated electronic publication output file format.

## Description

### BACKGROUND ART

The present invention relates to system and method for converting an electronic document from a paginated format to a non-paginated format, such as to preserve the source document formatting. The present invention is particularly applicable for electronic publications, in particular for mobile devices.

File conversions between different file formats are widely adopted in computer industry, as there is often a need to process computer data in different software systems. Throughout a computer environment, data is typically encoded in a variety of ways. Data conversions are common and may be as simple as the conversion of a text file from one character encoding system to another; or more complex, such as the conversion of document file formats, or the conversion of image and audio file formats.

A European patent application EP 0911743 A1 entitled "Converter for tag-delimited files" discloses a converter for automatically converting a tag delimited file. The file is sequentially scanned to locate a given binary sequence stored in a code stop encounter buffer. A digital control string is appended and control string and binary sequence are written to first pass conversion file the control string containing a color indicator and a write protector to control further processing.

Another prior art publication WO 2000020985 A1 entitled "Conversion of data representing a document to other formats for manipulation and display" discloses a computer implemented method of converting a document in an input format to a document in a different output format is disclosed. The method generally comprises locating data in the input document, grouping data into one or more intermediate format blocks in an intermediate format document, and converting the intermediate format document to the output format document using the intermediate format blocks. Each intermediate format block may be paragraph, a line, a word, a table, or an image. The input document may be received over a network and the output document is sent over the network. A linked table of contents and/or an index may be generated.

### DISCLOSURE OF THE INVENTION

It is the aim of the present invention to provide further improvements to converting an electronic document from a paginated format to a non-paginated format, such as to preserve the formatting of the paginated format. The purpose of the converter according to the present invention is to obtain documents in a format that allows presentation of data on a wide range of devices, so that the presentation may be adapted to characteristics and capabilities of a particular device.

The object of the invention is a computer-implemented method for converting an electronic document from a paginated format to a non-paginated format, the method characterized in that it comprises the steps of: receiving a paginated input file; filtering the input file content and metadata in order to find supported syntax elements; generating a model of the input file; generating an XHTML output file comprising metadata of the input file document in its header and the input content from the of the input file document; generating a CSS output file comprising formatting of the input content from the of the input file document; converting graphical files into a common graphical format and referencing the graphical files from the XHTML document; packing the XHTML, CSS and graphical files into a non-paginated electronic publication output file format.

Preferably, generation of the XHTML content is executed by creating a tree structure using XML.

Preferably, the CSS output file comprises typographic information including styles, colors, formatting, justification, and wherein the CSS file is tied to the XHTML file by reference.

The present invention also relates to a computer program comprising program code means for performing all the steps of the above-described computer-implemented method when the program is run on a computer, as well as to a computer readable medium storing computer-executable instructions performing all the steps of the computer-implemented method as described above when executed on a computer.

Another object of the present invention is a computer-implemented system for converting an electronic document from a paginated format to a non-paginated format, the system being characterized in that it comprises: a memory configured to receive a paginated input file; a syntax interpreter configured to interpret and filter the input file content and metadata in order to find supported syntax elements; a document structure generator configured to generate a model of the input file document; an XHTML generator module configured to generate an XHTML output comprising metadata of the input file document in its header and the input content from the of the input file document; a CSS generator module configured to generate a CSS output comprising formatting of the input content from the of the input file document; an output document generator configured to output graphical files in a common graphical format and referencing the graphical files from the XHTML document; a packing module configured to pack the XHTML, CSS and graphical files into a non-paginated electronic publication file format.

Preferably, the paginated input file is a file in the RTF format and the non-paginated electronic publication output file is a file in the ePUB format.

### BRIEF DESCRIPTION OF DRAWINGS

The method and system are presented by means of example embodiments on a drawing, in which:
Fig. 1 illustrates a system according to the present invention;
Fig. 2 illustrates a method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

### DESCRIPTION OF EXAMPLE EMBODIMENT

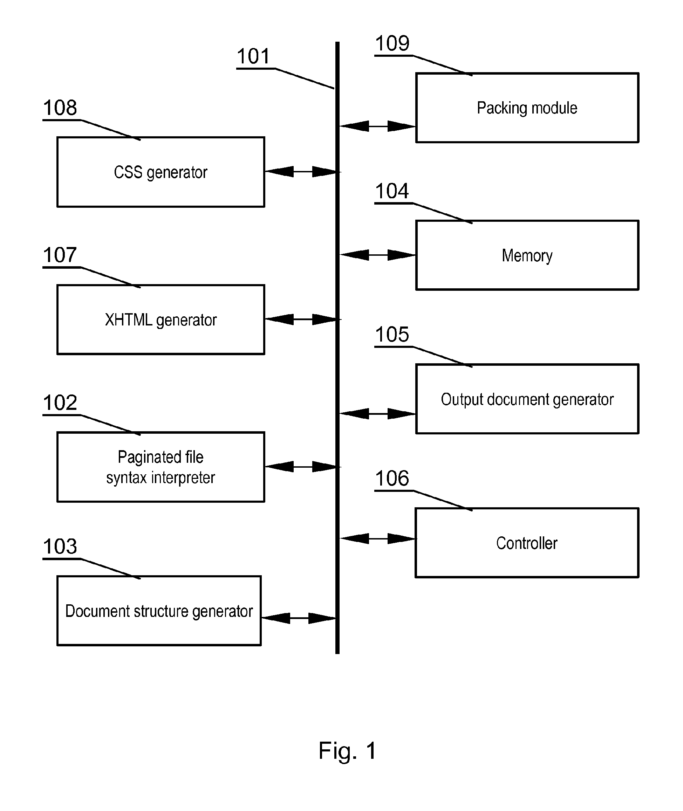

Fig. 1 presents a system according to the present invention. The system may be realized using a computer operated by specialized software or dedicated components or custom-made FPGA or ASIC circuits. The system comprises a data bus 101 communicatively coupled to a memory 104. Additionally, other components of the system are communicatively coupled to the system bus 101 so that they may be managed by a controller 106. A paginated file (e.g. in an RTF (Rich Text Format as specified by Microsoft Corporation) file) syntax interpreter 102 is responsible for interpreting content of a paginated input stored in the memory 104. Another module of the present system is a document structure generator 103 responsible for creating a complete document hierarchy for processing.

An output document generator 105 is configured to generate a suitably structured, non-paginated output content as a file, which may be stored in the memory 104. The aim of the non-paginated output is to separate content from its presentation and appropriate application of styles in the document. The output document generator 105 preferably creates an XHTML file (Extensible HyperText Markup Language), a CSS file (Cascading Style Sheets) applicable to the content of the XHTML file, and image(s) file(s) as well as auxiliary files such as navigation index. The XHTML file may be generated by a dedicated XHTML generator module 107 while the CSS file may be generated by a dedicated CSS generator module 108 controlled by the output document generator 105. The output documents generated by module 108 can be packed by a packing module 109 into a single file, such as an ePUB file, according to ePUB specification by International Digital Publishing Forum.

The document structure generator 103 is preferably configured to support the following paginated input document data:
- Metadata such as information about the document title, subject, author, page size, margins, Information about colors, fonts, style(s);
- Content elements such as text including its formatting, divisions: lines, paragraphs, sections, and pages, special characters, tabs, pauses, spaces, hyphenation, tables, pictures, footnotes etc.

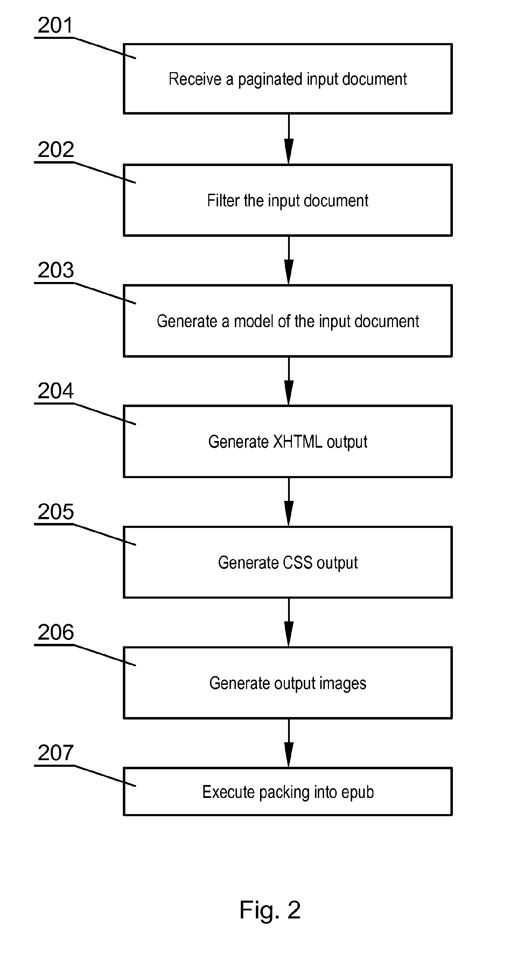

Fig. 2 illustrates a method according to the present invention. The procedure starts at step 201 from receiving a paginated input file, such as an RTF file. Subsequently, at step 202, the RTF file content and metadata are filtered in order to find supported syntax elements so that at step 203 there may be generated a model of the input document. The metadata are converted such that they may be output as XHTML file header data. Because the system outputs a non-paginated format, the margins and paging are not processed. At step 204 there is generated an XHTML output file comprising metadata in its header and the input content from the input file of step 201.

The generation of XHTML content is executed by creating a tree structure using XML, into which there are mapped content elements of the document's model structure. Each paragraph is for example delimited with the following tag: <p class="para"> and each emphasis in the text is identified with the following tag: <span class="text"> while tables are mapped with a specific tag <table>. Footnotes are mapped preferably into 'a href references while content of the footnote is embodied in a separate <div> block.

All typographic information such as styles, colors, formatting, justification is defined in a separate CSS file tied to the XHTML file by reference. Division of lines, paragraphs are mapped into CSS styles. When this is ready, a CSS document is generated at step 205 of the procedure.

Images from the input file are converted in step 206 to a common graphical format, such as JPEG or GIF, and stored separately in order to be referenced by the main XHTML file.

Finally, at step 207, the files may be packed into an electronic publication format, such as an ePUB file.

It can be easily recognized, by one skilled in the art, that the aforementioned method for converting from a paginated format to a non-paginated format may be performed and/or controlled by one or more computer programs. Such computer programs are typically executed by utilizing the computing resources in a computing device such as personal computers, personal digital assistants, cellular telephones, receivers and decoders of digital television or the like. Applications are stored on a non-transitory medium. An example of a non-transitory medium is a non-volatile memory, for example a flash memory or volatile memory, for example RAM. The computer instructions and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for converting an electronic document from a paginated format to a non-paginated format, the method **characterized in that** it comprises the steps of:
- receiving a paginated input file (201);
- filtering (202) the input file content and metadata in order to find supported syntax elements;
- generating (203) a model of the input file;
- generating (204) an XHTML output file comprising metadata of the input file document in its header and the input content from the of the input file document;
- generating (205) a CSS output file comprising formatting of the input content from the of the input file document;
- converting (206) graphical files into a common graphical format and referencing the graphical files from the XHTML document;
- packing (207) the XHTML, CSS and graphical files into a non-paginated electronic publication output file format.

2. The method according to claim 1, wherein generation of the XHTML content is executed by creating a tree structure using XML.

3. The method according to claim 1, wherein the CSS output file comprises typographic information including styles, colors, formatting, justification, and wherein the CSS file is tied to the XHTML file by reference.

4. The method according to claim 1, wherein the paginated input file is a file in the RTF format and the non-paginated electronic publication output file is a file in the ePUB format.

5. A computer program comprising program code means for performing all the steps of the computer-implemented method according to any of claim 1 when the program is run on a computer.

6. A computer readable medium storing computer-executable instructions performing all the steps of the computer-implemented method according to any of claims 1 when executed on a computer.

7. A computer-implemented system for converting from a paginated format to a non-paginated format, the system being **characterized in that** it comprises:
- a memory (104) configured to receive a paginated input file (201);
- a syntax interpreter (102) configured to interpret and filter (202) the input file content and metadata in order to find supported syntax elements;
- a document structure generator (103) configured to generate (203) a model of the input file document;
- an XHTML generator module (107) configured to generate (204) an XHTML output comprising metadata of the input file document in its header and the input content from the of the input file document;
- a CSS generator module (108) configured to generate (205) a CSS output comprising formatting of the input content from the of the input file document;
- an output document generator (105) configured to output graphical files in a common graphical format and referencing the graphical files from the XHTML document;
- a packing module (109) configured to pack (207) the XHTML, CSS and graphical files into a non-paginated electronic publication file format.

8. The system according to claim 7, wherein the paginated input file is a file in the RTF format and the non-paginated electronic publication output file is a file in the ePUB format.
